# EUROPÄISCHE PATENTSCHRIFT

(11) **EP 0 601 674 B1**
(45) Veröffentlichungstag und Bekanntmachung des Hinweises auf die Patenterteilung: **26.06.1996**
(21) Anmeldenummer: 93250302.2
(22) Anmeldetag: 03.11.1993
(51) Int. Cl.: A01N 47/18, A01N 25/04, C09D 5/14

(54) **Wässrige Dispersion mit fungizider und algistatischer Wirkung**
Aqueous dispersion having fungicidal and algistatic activity
Dispersion aqueuse à activité fongicide et algistatique

(30) Priorität: 08.12.1992 DE 4242389
(43) Veröffentlichungstag der Anmeldung: 15.06.1994
(73) Patentinhaber: Schülke & Mayr GmbH & Co. KG, 22840 Norderstedt (DE)
(72) Erfinder: Siegert, Wolfgang, D-25479 Ellerau (DE); Eggensperger, Heinz, Dr., D-22397 Hamburg (DE); Oltmanns, Peter, Dr., D-20255 Hamburg (DE); Beilfuss, Wolfgang, Dr., D-22339 Hamburg (DE); Diehl, Karl-Heinz, 22844 Norderstedt (DE)
(74) Vertreter: UEXKÜLL & STOLBERG

(56) Entgegenhaltungen:
- EP-A- 0 513 409
- US-A- 4 770 705
- PATENT ABSTRACTS OF JAPAN vol. 16, no. 207 (C-941)(5250) 18. Mai 1992 & JP-A-04 036 203 (KATAYAMA CHEM. WORKS CO LTD)

## Beschreibung

Die Erfindung betrifft wäßrige Dispersionen für die biozide Ausrüstung von Gegenständen oder Beschichtungen, deren Oberflächen erfahrungsgemäß häufig von Algen oder Pilzen befallen werden. Ferner betrifft sie ein Verfahren zu deren Herstellung und ihre Verwendung.

Algen- und Pilzbefall ist nicht nur optisch wenig ansprechend, sondern kann auch bei nachfolgendem Flechten- oder Moosbewuchs zur Materialschädigung und zur Verkürzung der Gebrauchsdauer führen. Der mikrobielle Befall von Gegenständen oder darauf aufgebrachten Beschichtungen tritt in Bereichen mit hoher Luftfeuchtigkeit besonders intensiv auf wie beispielsweise im Bereich der Lebensmittelindustrie, in Molkereien, Brauereien oder an Nordseiten von Gebäuden. Betroffen sind insbesondere Beschichtungen wie Farben, Lacke und Putze.

Der Versuch, das oben beschriebene Problem durch Zusatz von pulverförmigen Stoffen zu den verwendeten Beschichtungsmaterialien zu lösen, ist mit zahlreichen anwendungstechnischen Nachteilen verbunden. Die Forderung nach lösungsmittelfreien bzw. -armen Zubereitungen führte zur Entwicklung wäßriger Dispersionen, in denen bekannte wasserunlösliche fungizide und algistatische Wirkstoffe eingesetzt wurden. Besonders problematisch ist die Behandlung von Alternaria-Spezies, die häufig trotz fungizider und algistatischer Ausrüstung von beispielsweise Beschichtungen auf Farb-, Lack- und Putzanstrichen mit handelsüblichen Präparaten auftreten. Die auf dem Markt verfügbaren Dispersionen besitzen keine spezifische Wirksamkeit gegen Alternaria. Stabile, wirksame, wäßrige Dispersionen zur fungiziden und algistatischen Ausrüstung von Farben und Lacken und Putzen mit Alternaria-Wirksamkeit bei gleichzeitiger guter Stabilität und Auswaschbeständigkeit sind bisher nicht verfügbar.

Der Erfindung liegt daher die Aufgabe zugrunde, eine wäßrige Dispersion mit fungizider und algistatischer Wirksamkeit, einschließlich Wirksamkeit gegen Alternaria-Spezies zur Verfügung zu stellen, die die oben genannten Nachteile zufriedenstellend löst.

Diese Aufgabe wird durch eine wäßrige Dispersion gelöst, die dadurch gekennzeichnet ist, daß sie eine Mischung der Wirkstoffe
a) Carbendazim,
b) 2-(Thiocyanomethylthio)benzothiazol (TCMTB) und
c) 2-Methylthio-4-t-butylamino-6-cyclopropylamino-s-triazin
umfaßt.

Bevorzugte Ausführungsformen sind Gegenstand der Unteransprüche.

Die erfindungsgemäße Dispersion zeichnet sich insbesondere durch ihre gute mikrobiologische Wirksamkeit gegen Pilze (speziell Alternaria-Spezies) und Algen aus. Diese biozide Wirkung kann auch bei hoher Auswaschbelastung über einen ausgedehnten Zeitraum erzielt werden. Es liegt daher im Vergleich mit den Einzelkomponenten nicht nur ein breiteres Wirkungsspektrum vor sondern es zeigt sich eine synergistische Wirkungssteigerung.

Die erfindungsgemäße Dispersion zeichnet sich insgesamt durch folgende Merkmale aus:
- Auswaschbeständigkeit
- Verwendung AOX-freier, Zusatz- und Wirkstoffe (AOX = adsorbierbare organische Halogenverbindungen)
- frei von niedrig siedenden organischen Lösungsmitteln
- Einsatz von geringstmöglichen Anteilen organischen Lösungsvermittler
- gute bis sehr gute Dispersionsstabilität
- homogene Mischung mit guten Fließeigenschaften
- praktisch keine Sedimentbildung bei Lagerung
- gute Beständigkeit gegen Licht-, insbesondere UV-Licht, pH-, Temperatur- und Umwelteinflüsse
- gute Verträglichkeit mit anderen Rezepturbestandteilen
- gute Verarbeitbarkeit der Wirkstoffe
- gute Stabilität der Wirkstoffe in der Zubereitung und im eingearbeiteten Produkt
- Hydrolysebeständigkeit der Wirkstoffe
- langandauernde Wirkung bei niedriger Einsatzkonzentration
- geringe Toxizität gegenüber Säugetieren
- günstiges Preis-/Leistungsverhältnis
- praktisch farblos und geruchsarm
- niedriger Dampfdruck der Wirkstoffe.

Wesentlich ist, daß die erfindungsgemäße Dispersion eine Wirkstoffkombination aus den beiden
- - fungiziden Wirkstoffen:: Carbendazim und 2-(Thiocyanomethylthio)benzothiazol (TCMTB)
und dem
- - algistatischen Wirkstoff:: 2-Methylthio-4-t-butylamino-6-cyclopropylamino-s-triazin ist.

Sie umfaßt im allgemeinen 1 bis 99 Gew.-% dieser Wirkstoffe, wobei der Rest der Dispersion aus üblichen Formulierungshilfsmitteln besteht. Vorzugsweise liegt der Wirkstoffgehalt im Bereich von 2 bis 90 Gew.-% und besonders bevorzugt im Bereich von 5 bis 80 Gew.-%.

Beispielsweise umfaßt die erfindungsgemäße Dispersion
- 2,5 bis 26 Gew.-%: Carbendazim,
- 6,6 bis 69 Gew.-%: 30 %-ige wäßrige Emulsion von 2-(Thiocyanomethylthio)-benzothiazol (TCMTB 30) und
- 0,5 bis 5 Gew.-%: 2-Methylthio-4-t-butylamino-6-cyclopropylamino-s-triazin.

Vorzugsweise enthält sie
- 5 bis 10 Gew.-%: Carbendazim,
- 10 bis 40 Gew.-%: TCMTB 30 und
- 1 bis 3 Gew.-%: 2-Methylthio-4-t-butylamino-6-cyclopropylamino-s-triazin.

Neben den erfindungsgemäß notwendigerweise vorhandenen drei Wirkstoffen können auch ein oder mehrere weitere algistatische und/oder fungizide Wirkstoffe vorhanden sein. Diese sind vorzugsweise halogenfrei und umfassen beispielsweise die Wirkstoffe Thiabendazol, Mercaptobenzthiazol und N-Octylisothiazolon. Thiabendazol ist hiervon bevorzugt. Sie können jeweils in einer Menge von bis zu 10 Gew.% vorhanden sein, wobei ihre Gesamtmenge jedoch 30 Gew.% nicht übersteigt. Wahlweise können der Dispersion auch handelsübliche Topfkonservierer wie beispielsweise O-Formale, N-Formale (Formaldehyddepotverbindungen, in denen Formaldehyd mit Alkoholen wie Ethylenglykol, Propylenglykol, Benzylalkohol oder Butyldiglykol oder mit Aminverbindungen wie Ethanolamin und Propanolaminen unter Bildung von Halbacetalen oder analogen Verbindungen reversibel gebunden sind) oder Isothiazolone zugegeben werden. In der erfindungsgemäßen Dispersion kann der Topfkonservierer in einer Menge von 0,005 bis 0,5 Gew.%, vorzugsweise 0,01 bis 0,1 Gew.% enthalten sein. Wenn die Dispersion beispielsweise in einer Farbe oder einem anderen Produkt eingesetzt werden, kann die Menge vorher auf bis zu 2 Gew.% oder gar auf bis zu 5 Gew.% erhöht werden. Der Farbe selbst braucht dann kein weiterer Topfkonservierer zugesetzt zu werden.

Neben den Wirkstoffen kann die erfindungsgemäße Dispersion ferner übliche Hilfsmittel wie Dispergiermittel, hochsiedende Lösungsvermittler, Antibackmittel, Verdickungsmittel, Entschäumer, Kältestabilisatoren, Füllstoffe, Konservierungsmittel und/oder Trägerstoffe umfassen.

Als Dispergiermittel eignen sich beispielsweise nichtionische Tenside wie Fettalkoholethoxylate. Brauchbar sind ferner Alkylphenolethoxylate, wobei die Alkylgruppe 1 bis 15 Kohlenstoffatome, insbesondere 1 bis 10 Kohlenstoffatome umfaßt und die Zahl der Ethylenoxygruppen 1 bis 10 beträgt, und Polyacrylsäuresalze. Insbesondere geeignet ist beispielsweise C₁₀-Oxoalkohol mit 3 Ethylenoxygruppen, C₁₃-Oxoalkohol mit 3 oder 5 Etyhlenoxygruppen, C₁₂-C₁₄-Fettalkohol mit 2,5 Ethylenoxygruppen, Laurylalkoholpolyglykolether mit 3 Ethylenoxygruppen und Nonylphenol mit 5 Ethylenoxygruppen. Diese Dispergiermittel können jeweils allein oder im Gemisch von einer oder mehreren dieser Verbindungen eingesetzt werden. Bevorzugt sind nichtionische Fettalkoholethoxylate mit 2 bis 9 Ethylenoxygruppen. Die Dispergiermittel können in einer Menge von bis zu 30 Gew.%, insbesondere bis zu 20 Gew.% und vorzugsweise 14 bis 18 Gew.% eingesetzt werden.

Beispiele für hochsiedende Lösungsvermittler sind Glykole, deren Ester oder Ether wie Ethylenglykol, Diethylenglykol, Polyethylenglykol (300 bis 600 Dalton) oder deren Mono- oder Dialkylether, Propylenglykol, Dipropylenglykol, Polypropylenglykol, deren Mono- oder Dialkylether, Butylenglykol, Dibutylenglykol, deren Mono- oder Dialkylether oder die entsprechenden Alkylester, wobei die Alkylgruppen jeweils 1 bis 10 und vorzugsweise 1 bis 4 Kohlenstoffatome aufweisen. Besonders bevorzugt sind 1,3-Butylenglykol und Polyethylenglykol 400 (das durchschnittliche Molekulargewicht beträgt 400). Auch Gemische dieser Lösungsvermittler können eingesetzt werden. Teilweise besitzen die Lösungsvermitter in den Dispersionen eine die Konsistenz regulierende (verdickende oder verdünnende) Wirkung und/oder wirken als Kältestabilisatoren (Frostschutzmittel). Die Lösungsvermittler können in einer Menge von bis zu 15 Gew.%, insbesondere bis zu 10 Gew.% und vorzugsweise bis zu 8 Gew.% eingesetzt werden. Besonders bevorzugt sind Mengen von 4 bis 8 Gew.%

Bevorzugte Gemische von Dispergiermitteln und Lösungsvermittlern umfassen:
- 10 Gew.%: C₁₃-Oxoalkohol mit 5 Ethylenoxygruppen
- 4-8 Gew.%: Laurylalkoholpolyglykolether mit 3 Ethylenoxygruppen (vorzugsweise 6 Gew.%) und
- 4-8 Gew.%: Butandiol-1,3 oder eines Gemisches aus Butandiol-1,3 und Polyethylenglykol 400 (vorzugsweise 6 Gew.%) oder
- 6-8 Gew.%: Polyethylenglykol 400 (vorzugsweise mindestens 4 Gew.%).

Insbesondere die Stabilität und Handhabbarkeit von solche Dispergiermittel und/oder Lösungsvermittler enthaltenden Dispersionen ist selbst nach längerer Lagerung, auch unter sehr ungünstigen Temperatur- und Feuchtigkeitsbedingungen, überraschend gut. Eine Entmischung der Dispersionskomponenten wird in der Regel sogar vermieden.

Die erfindungsgemäße Wirkstoffkombination kann in Form eines Pulvers, einer Lösung oder einer Paste vorliegen, wobei sie vorzugsweise fließfähig ist.

Die einzelnen Bestandteile der Dispersion weisen vorzugsweise eine Teilchengröße < 70 µm auf, wobei eine Teilchengröße < 60 und insbesondere < 50 µm bevorzugt ist. Eine solche Teilchengröße kann durch Feinstvermahlung der festen Wirkstoffbestandteile erhalten werden. Vorzugsweise wird die Vermahlung in nassem Zustand mittels Perl- und/oder Kugel- und/oder Kolloidmühlen erfolgen.

Die erfindungsgemäßen Dispersionen können nach den üblichen, dem Fachmann geläufigen Verfahren hergestellt werden. Beispielsweise werden sie hergestellt, indem die festen Wirkstoffbestandteile in Gegenwart der übrigen Formulierungshilfsmittel in Wasser zu einer Vormischung feinstvermahlen werden und dann anschließend die flüssigen Wirkstoffkomponenten eingerührt werden. So können beispielsweise die Wirkstoffbestandteile 2-Methylthio-4-t-butylamino-6-cyclopropylamino-s-triazin und Carbendazim vorab naß feinstvermahlen werden und anschließend der dritte Wirkstoff TCMTB eingerührt werden.

Die erfindungsgemäße Dispersion kann als biozider Zusatz zu Beschichtungen, zu Kunststoffdispersionen, insbesondere solchen, die filmbildend sind und auf Polyacrylat basisieren, zur Behandlung von Flächen und Materialien und zur fungiziden und algistatischen Ausrüstung von Farben, Lacken und Putzen verwendet werden.

In der Praxis kann die Einsatzkonzentration der erfindungsgemäßen Dispersion im Bereich von 0,05 bis 10 Gew.-%, insbesondere 0,1 bis 5 Gew.-% und bevorzugt 0,5 bis 3 Gew.-% betragen.

In Beschichtungen kann die erfindungsgemäße Dispersion in solchen Mengen eingesetzt werden, daß auf 1 m² Fläche 0,01 bis 10 g, vorzugsweise 0,1 bis 4 g zur Anwendung kommen.

Die Wirksamkeit der erfindungsgemäßen Dispersion kann anhand von Hemmhof-Tests gezeigt werden.

Hierbei werden homogene, klare Lösungen der Einzelwirkstoffe sowie der erfindungsgemäßen Wirkstoffkombination in Dimethylformamid als Lösungsmittel auf Wirksamkeit geprüft. Bei Hefen und Pilzen ist eine Wirkungssteigerung bei Einsatz der Wirkstoffkombination zu beobachten.

Zur Überprüfung der fungiziden und algistatischen Wirksamkeit der erfindungsgemäßen Dispersionen in damit ausgrüsteten Produkten wurden die folgenden Formulierungen A und B in eine weiße Standard-Dispersionsfarbe eingearbeitet. Ziel war es, diese Formulierungen im Vergleich zu einem bekannten Produkt C auf ihre mikrobiologische Wirksamkeit gegen Pilze (speziell Alternaria) und Algen ohne und nach Auswaschbelastung zu überprüfen. Daneben sollten die ausgerüsteten Muster in einem weiteren Versuchsansatz in Hinsicht auf eventuelle Verfärbungen durch Witterungseinflüsse beurteilt werden.

### Formulierung A

- 26 Gew.%: Carbendazim
- 69 Gew.%: TCMTB 30
- 5 Gew.%: 2-Methylthio-4-t-butylamino-6-cyclopropylamino-s-triazin

### Formulierung B

- 10 Gew.%: Carbendazim
- 26,9 Gew.%: TCMTB 30
- 3,3 Gew.%: 2-Methylthio-4-t-butylamino-6-cyclopropylamino-s-triazin

### Formulierung C

- 5 Gew.%: Carbendazim
- 20 Gew.%: 3-(3,4-Dichlorphenyl)-1,1-dimethylharnstoff

### Material und Methoden

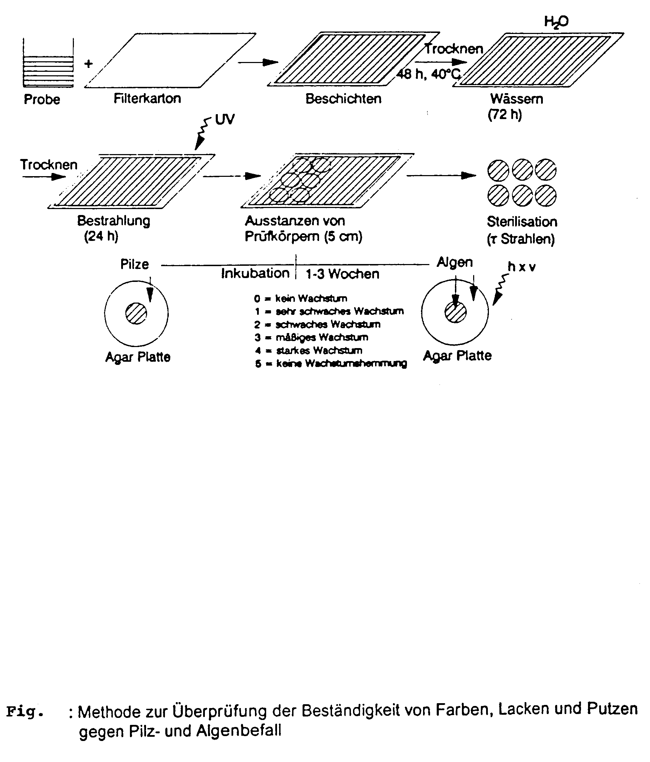

Die Vorgehensweise bei der mikrobiologischen Überprüfung auf ausreichende Beständigkeit gegen Pilz- und Algenbefall ist in der Figur schematisch zusammengefaßt.

Die für die Versuche eingesetzte Reinacrylat-Fassadenbeschichtung hatte folgende Zusammensetzung:

| | Gew.% |
|---|---|
| Texanol | 1,20 |
| Natrosol 250 HBR | 0,30 |
| Wasser | 19,95 |
| Calgon N, 10 % in Wasser | 0,20 |
| Pigmentverteiler A | 0,25 |
| Entschäumer Nopco 8034, 50 % in Wasser | 0,12 |
| Ammoniak, 25 % | 0,50 |
| Titandioxid Kronos RN56 | 20,00 |
| Durcal 5 | 10,00 |
| Millicarb | 10,40 |
| Aluminiumsilikat P 820 | 2,00 |
| Plextol D 498 | 35,00 |
| Entschäumer Nopco 8034 | 0,08 |

In dieses Anstrichmittel wurden in 3 getrennten Ansätzen jeweils 1,0 % des bekannten Produktes C, A oder B eingearbeitet. Bei den 3 Ansätzen handelte es sich um:
a) Prüfung auf Verfärbungen
b) Prüfung auf Beständigkeit gegen Pilz- und Algenbefall ohne Auswaschbelastung
c) Prüfung auf Beständigkeit gegen Pilz- und Algenbefall mit Auswaschbelastung.

A und B stellen naßfeinstvermahlene erfindungsgemäße Wirkstoffkombinationen aus den beiden fungiziden und dem einen algistatischen Wirkstoff(en) dar. Dabei besitzt B gegenüber A verbesserte Fließeigenschaften. Nach intensivem Durchrühren der proben wurden diese mit einem Filmaufziehdreieck in 250 µm Naßfilmdicke auf Filtrierkarton (Typ 2589 naßfest) als Trägermaterial aufgebracht.

Die Testobjekte wurden 24 Stunden bei Raumtemperatur vorgetrocknet und anschließend 24 Stunden bei 40°C nachgetrocknet.

Die Testobjekte des Ansatzes a) wurden zur Prüfung auf eventuelle Verfärbungen durch Umwelt- und Lichteinflüsse 500 Stunden einer künstlichen, verstärkten Bewitterung (Betauung, UV) ausgesetzt (QUV, Q-Panel Comp., Cleveland) und danach direkt ausgewertet.

Die Ansätze b) und c) gingen in die mikrobiologische Überprüfung. Die Testobjekte des Ansatzes c) wurden 72 Stunden einer Auswaschbelastung durch fließendes Wasser (ca. 1 l/min) ausgesetzt und anschließend wie oben beschrieben getrocknet. Die getrockneten Testobjekte wurden 24 Stunden mit UV bestrahlt (3 Röhren, Philips TUV 40 W 640 T 12, 50 cm Abstand zu den Prüfkörpern).

Aus der Mitte der Testobjekte wurden Prüfkörper mit einem Durchmesser von 50 mm ausgestanzt und anschließend mit gamma-Strahlen sterilisiert.

### Testung auf Beständigkeit gegen Pilzbefall

Als Testorganismen wurden die Pilze Penicillium funiculosum, Aspergillus niger und Alternaria sp. verwendet.

Auf Sabouraud-Agar wurden 0,2 ml einer Sporensuspension mit einer Sporenmenge von ca. 10⁷/ml ausgespatelt. Auf den so vorbereiteten Agar wurden die Prüfkörper (⌀ 50 mm) aufgelegt und 2 Wochen bei 25 bis 27°C bebrütet.

Bewertungskriterien bei der Auswertung war das Pilzwachstum auf der Platte bzw. den Prüfkörpern sowie eine Hemmhof-Bildung um die Prüfkörper. Die Auswertung erfolgte halbquantitativ.

### Testung auf Beständigkeit gegen Algenbefall

Als Testorganismus wurde die Grünalge Chlorella fusca verwendet.

Auf einem Mineralmedium-Agar (Knop'sche Lösung + 0,9 % Agar-Agar) wurden 0,1 ml einer Algensuspension mit einer Konzentration von ca. 10⁶ Zellen/ml ausgespatelt. Auf den so vorbereiteten Agar wurden die Prüfkörper mit einem Durchmesser von 50 mm aufgelegt. Danach wurden zusätzlich 0,3 ml Algensuspension auf die Oberfläche der Prüfkörper gleichmäßig verteilt. Die Bebrütung erfolgte bei 25°C unter intensiver Beleuchtung (2000 lux; 4x Philips TLD 18W). Die Prüfkörper wurden während der einwöchigen Inkubationszeit ständig feucht gehalten.

Bewertungskriterien bei der Auswertung waren der Hemmhof um die Prüfkörper und das Algenwachstum auf der Oberfläche der Prüfkörper. Die Auswertung erfolgte halbquantitativ.

### Ergebnisse

Eine kombinierte Tau/UV-Bewitterung von 500 Stunden führte zu keinen Verfärbungen der Farbfilme.

Die Wirksamkeit aller getesteten Präparate gegen Penicillium funiculosum war auch nach einer 72-stündigen Belastung ausreichend, um einen Oberflächenbewuchs der Probekörper zu unterbinden.

Die Auswaschbeständigkeit von A und B war im allgemeinen besser als die des bekannten Produktes.

A und B zeigten eine sehr gute Wirksamkeit gegen Alternaria sp., die bei einer Einsatzkonzentration von 1,0 % auch nach einer Auswaschbelastung von 72 Stunden voll erhalten blieb.

Die gute Wirksamkeit dieser beiden Präparate gegen Algen entsprach der des bekannten Produkts und ließ sich bei einer 1,0 %-igen Einsatzkonzentration nach einer Auswaschbelastung von 72 Stunden aufrechterhalten.

Die Ergebnisse sind in den Tabellen 1 und 2 zusammengefaßt.

**Tabelle 1**

| Beständigkeit einer Fassadenfarbe gegen Pilzbefall, Hemmwirkung auf Aspergillus niger und Alternaria sp | | | | |
|---|---|---|---|---|
| | Aspergillus niger | | Alternaria sp. | |
| Auswaschbelastung | 0 h | 72 h | 0 h | 72 h |
| Kontrolle | 5 | 5 | 5 | 5 |
| C 1,0 % | 1 | 2 | 5 | 5 |
| A 1,0 % | (0) | 1 | 2 | 2 |
| B 1,0 % | (0) | 1 | 2 | 2 |
| 0 = Hofbildung (bewuchsfreie Zone im Umkreis der Probe) (0) = Pilz ist bis an die Probe herangewachsen 1 = Probe nur am Rand bewachsen 2 = Probe vom Rand her bewachsen (weniger als 25 %) 3 = Probenoberfläche mit einzelnen Kolonien bewachsen (25-75 %) 4 = Probenoberfläche verbreitet bewachsen (> = 75 %) 5 = Probenoberfläche vollständig bewachsen (100 %) | | | | |

**Tabelle 2**

| | Chlorella fusca | | | |
|---|---|---|---|---|
| Auswaschbelastung | 0 h | | 72 h | |
| | Hemmhof | Bewuchs | Hemmhof | Bewuchs |
| Kontrolle | 0 | +++ | 0 | ++ |
| C 1,0 % | > 18 mm | - | 16 mm | + |
| A 1,0 % | 16 mm | - | 17 mm | - |
| B 1,0 % | 17 mm | - | 16 mm | - |
| - = kein Wachstum auf der Oberfläche des Prüfkörpers + = geringes Wachstum auf der Oberfläche des Prüfkörpers ++ = mäßiges Wachstum auf der Oberfläche des Prüfkörpers +++ = massives Wachstum auf der Oberfläche des Prüfkörpers 0 = kein Hemmhof | | | | |

## Patentansprüche

1. Wäßrige Dispersion, dadurch gekennzeichnet, daß sie eine Mischung der Wirkstoffe
a) Carbendazim,
b) 2-(Thiocyanomethylthio)benzothiazol (TCMTB) und
c) 2-Methylthio-4-t-butylamino-6-cyclopropylamino-s-triazin
umfaßt.

2. Dispersion nach Anspruch 1, dadurch gekennzeichnet, daß der Wirkstoffgehalt im Bereich von 1 bis 99 Gew.%, insbesondere 2 bis 90 Gew.%, bevorzugter 5 bis 80 Gew.% liegt und der Rest aus üblichen Formulierungshilfsmittel besteht.

3. Dispersion nach Anspruch 1 oder 2, dadurch gekennzeichnet, daß sie 2,5 - 26 Gew.%, vorzugsweise 5 - 10 Gew.% Carbendazim, 6,6 - 69 Gew.%, vorzugsweise 10 - 40 Gew.% 30 %-ige wäßrige Emulsion von 2-(Thiocyanomethylthio)benzothiazol (TCMTB 30) und 0,5 - 5 Gew.%, vorzugsweise 1 - 3 Gew.% 2-Methylthio-4-t-butylamino-6-cyclopropylamino-s-triazin umfaßt.

4. Dispersion nach einem der Ansprüche 1 bis 3, dadurch gekennzeichnet, daß sie Topfkonservierungsmittel umfaßt, die insbesondere ausgewählt sind aus O-Formalen, N-Formalen oder Isothiazolonen.

5. Dispersion nach einem der vorhergehenden Ansprüche, dadurch gekennzeichnet, daß die üblichen Hilfsmittel Dispergiermittel, hochsiedende Lösungsvermittler, Antibackmittel, Verdickungsmittel, Entschäumer, Kältestabilisatoren, Füllstoffe, Konservierungsmittel und/oder Trägerstoffe umfassen.

6. Dispersion nach einem der vorhergehenden Ansprüche, dadurch gekennzeichnet, daß die Dispergiermittel Fettalkoholethoxylate, Alkylphenolethoxylate, wobei die Alkylgruppe 1 bis 15 Kohlenstoffatome aufweist und die Zahl der Ethylenoxygruppen 1 bis 10 beträgt, und/oder Polyacrylsäuresalze umfassen und/oder die hochsiedenden Lösungsvermittler Glykole, deren Ester oder deren Ether umfassen.

7. Dispersion nach einem der vorhergehenden Ansprüche, dadurch gekennzeichnet, daß die Dispersionskomponenten jeweils eine Teilchengröße kleiner als 70, insbesondere 60 und bevorzugt 50 µm aufweisen.

8. Verfahren zur Herstellung einer Dispersion gemäß einem der Ansprüche 1 bis 7, dadurch gekennzeichnet, daß die Bestandteile miteinander vermischt werden, wobei vorzugsweise die festen Wirkstoffkomponenten in Gegenwart der übrigen Formulierungshilfsmittel in Wasser zu einer Vormischung feinstvermahlen werden und anschließend die flüssigen Wirkstoffkomponenten eingerührt werden.

9. Verwendung einer Dispersion gemäß einem der Ansprüche 1 bis 7 zur fungiziden und algistatischen Ausrüstung von Farben, Lacken und Putzen.

## Claims

1. Aqueous dispersion, characterised in that it comprises a mixture of the active ingredients
a) carbendazim,
b) 2-(thiocyanomethylthio)benzothiazole (TCMTB) and
c) 2-methylthio-4-t-butylamino-6-cyclopropylamino-s-triazine.

2. Dispersion according to claim 1, characterised in that the active ingredient content is in the range 1 to 99 wt.%, particularly 2 to 90 wt.-%, preferably 5 to 80 wt.-%, and the remainder consists of customary formulation auxiliaries.

3. Dispersion according to claim 1 or 2, characterised in that it comprises 2.5 - 26 wt.-%, preferably 5 - 10 wt.-% carbendazim, 6.6 - 69 wt.-%, preferably 10 - 40 wt.-% 30 % aqueous emulsion of 2-(thiocyanomethylthio)benzothiazole (TCMTB 30) and 0.5 - 5 wt.-%, preferably 1 - 3 wt.-% 2-methylthio-4-t-butylamino-6-cyclopropylamino-s-triazine.

4. Dispersion according to one of claims 1 to 3, characterised in that it comprises pot preservatives which are selected in particular from O-formals, N-formals or isothiazolones.

5. Dispersion according to one of the preceding claims, characterised in that the customary auxiliaries comprise dispersion agents, high-boiling solubilizers, anti-caking agents, thickeners, defoaming agents, low-temperature stabilizers, fillers, preservatives and/or carriers.

6. Dispersion according to one of the preceding claims, characterised in that the dispersing agents comprise fatty alcohol ethoxylates, alkyl phenol ethoxylates, whereby the alkyl group has 1 to 15 carbon atoms and the number of ethylenoxy groups is 1 to 10, and/or polyacrylic acid salts and/or the high-boiling solubilizers comprise glycols, their esters or their ethers.

7. Dispersion according to one of the preceding claims characterized in that the dispersion components in each case have a particle size smaller than 70, particularly 60 and preferably 50 µm.

8. Process for the production of a dispersion according to one of claims 1 to 7, characterised in that the constituents are mixed together, whereby the solid active ingredient components are preferably very finely ground to a premix in the presence of the other formulation auxiliaries in water and then the liquid active ingredient components are stirred in.

9. Use of a dispersion according to one of claims 1 to 7 for the fungicidal and algistatic finishing of paints, varnishes and plasters.

## Revendications

1. Dispersion aqueuse caractérisée en ce qu'elle contient un mélange des agents actifs
a) Carbendazim,
b) 2-(Thiocyanométhylthio)benzothiazole (TCMTB) et
c) 2-Méthylthio-4-t-butylamino-6-cyclopropylamino-s-triazine.

2. Dispersion selon la revendication 1, caractérisée en ce que la teneur en agents actifs est comprise entre 1 et 99% en poids, en particulier entre 2 et 90% en poids, préférentiellement entre 5 et 80% en poids et le reste se compose d'auxiliaires habituels de formulation.

3. Dispersion selon la revendication 1 ou 2, caractérisée en ce qu'elle contient 2,5-26% en poids, avantageusement 5-10% en poids de carbendazim, 6,6-69% en poids, avantageusement 10-40% en poids d'une émulsion aqueuse à 30% de 2-(thiocyanométhylthio)benzothiazole (TCMTB 30) et 0,5-5% en poids, avantageusement 1-3% en poids de 2-méthylthio-4-t-butylamino-6-cyclopropylamino-s-triazine.

4. Dispersion selon l'une quelconque des revendications 1 à 3, caractérisée en ce qu'elle contient des agents de conservation en pot qui sont, en particulier, choisis parmi les O-formals, les N-formals ou les isothiazolones.

5. Dispersion selon l'une quelconque des revendications précédentes, caractérisée en ce que les agents auxiliaires habituels sont des agents dispersants, des médiateurs de dissolution à fort point d'ébullition, des agents antiagglutination, des agents épaississants, des agents anti-mousse, des stabilisateurs à froid, des charges, des agents de conservation et/ou des véhicules.

6. Dispersion selon l'une quelconque des revendications précédentes, caractérisée en ce que les agents de dispersion comprennent des éthoxylates d'alcool gras, des éthoxylates d'alkyl phénol, où le groupe alkyle présente 1 à 15 atomes de carbone et le nombre des groupes oxyéthylènes est de 1 à 10, et/ou des sels d'acide polyacrylique et/ou les médiateurs de dissolution à fort point d ébullition de glycol, leurs esters ou leurs éthers.

7. Dispersion selon l'une quelconque des revendications précédentes, caractérisée en ce que les composants de la dispersion présentent, à chaque fois, une grandeur de particule plus petite que 70, en particulier de 60 et, préférentiellement, de 50 µm.

8. Procédé de production d'une dispersion selon l'une quelconque des revendications 1 à 7, caractérisé en ce que les constituants sont mélangés les uns aux autres, et, avantageusement, les composants d'agents actifs solides sont broyés dans l'eau en présence des auxiliaires habituels de formulation en un pré-mélange, de manière très fine, et ensuite les composants d'agents actifs liquides y sont mélangés.

9. Utilisation d'une dispersion selon l'une quelconque des revendications 1 à 7 pour l'équipement fongicide et algistatique des peintures, vernis et crépis.
